(19) Europäisches Patentamt
European Patent Office
Office européen des brevets

(11) EP 3 438 898 A1

(12) EUROPEAN PATENT APPLICATION
published in accordance with Art. 153(4) EPC

(43) Date of publication:
06.02.2019 Bulletin 2019/06

(51) Int Cl.:
G06Q 10/06 (2012.01)    G06Q 10/10 (2012.01)

(21) Application number: 17773147.8

(86) International application number:
PCT/CN2017/077905

(22) Date of filing: 23.03.2017

(87) International publication number:
WO 2017/167117 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2016 CN 201610195728

(71) Applicant: Alibaba Group Holding Limited
Grand Cayman (KY)

(72) Inventors:
• SONG, Huaqing
  Hangzhou
  Zhejiang 311121 (CN)
• FANG, Tao
  Hangzhou
  Zhejiang 311121 (CN)
• LIU, Shiqi
  Hangzhou
  Zhejiang 311121 (CN)
• TANG, Ren
  Hangzhou
  Zhejiang 311121 (CN)
• PENG, Chuanjun
  Hangzhou
  Zhejiang 311121 (CN)

(74) Representative: Finnegan Europe LLP
1 London Bridge
London SE1 9BG (GB)

(54) **DATA PROCESSING METHOD AND DEVICE**

(57) The present application relates to a data processing method and apparatus. The data processing method includes: acquiring interview data about candidates in a set historical period, the interview data being divided into separate interview rounds, and interview data of each round including a candidate, an interviewer, and an interview result; and evaluating interviewers based on interview result differences of different interviewers reflected by the interview data. The present invention can automatically use massive historical interview data to evaluate interview abilities of interviewers. On one hand, the workload of manual evaluation on the interviewers is reduced, thus reducing the interviewer team management cost of an enterprise. On the other hand, the evaluation on the interview abilities of the interviewers is more objective and accurate, helping the enterprise to choose excellent interviewers, thus improving the interview performance of the enterprise.

EP 3 438 898 A1

Acquire interview data about candidates in a set historical period, wherein the interview data is divided into separate interview rounds, and interview data of each round includes a candidate, an interviewer, and an interview result ⟶ S101

Evaluate interviewers based on interview result differences of different interviewers reflected by the interview data ⟶ S102

**FIG. 1**

## Description

### Technical Field

The present invention relates to the field of computers, and in particular, to a data processing method and apparatus.

### Background Art

Talent recruitment is an indispensable important link in development of enterprises. In various enterprises, special interviewers are usually responsible for interview during recruitment. Especially, a large enterprise with a great recruitment demand can have a huge interviewer team.

Interviewers have different abilities. For a large enterprise, interviewers are directly faced with massive applications in the resume evaluation and first-round interview task at the initial stage of the interview link. The interviewers inevitably have some subjective opinions or make erroneous judgments. In this case, it is particularly important to evaluate an interview ability of an interviewer. An excellent interviewer can significantly reduce erroneous judgments and leave interview feedback of great reference value for reference by other subsequent interviewers, thus enhancing information exchange and improving efficiency. On the contrary, an unqualified interviewer will cause a vicious circle.

Currently, interview abilities of interviewers are mainly evaluated manually. Interviewers are evaluated and managed based on the subjective feeling of human resource (HR) staff or a manager or by conducting statistics on interview results. Such a manner has two defects: one is that the evaluation results of interview abilities of interviewers are too subjective and not accurate enough; the other is that evaluation on interview abilities of interviewers requires high manual workload and is inefficient. Especially, when the interviewer team is huge, the workload is significantly increased, the efficiency becomes even lower, and the evaluation effect is also undermined.

### Summary of the Invention

An objective of the present invention is to provide a data processing method and apparatus, which can make an evaluation on interview abilities of interviewers more objective and accurate, thus helping improve the interview performance.

In order to achieve the foregoing objective, the present invention proposes a data processing method, including:

acquiring interview data about candidates in a set historical period, the interview data being divided into separate interview rounds, and interview data of each round including a candidate, an interviewer, and an interview result; and

evaluating interviewers based on interview result differences of different interviewers reflected by the interview data.

Further, the foregoing method can also have the following characteristics: the step of evaluating interviewers based on interview result differences of different interviewers reflected by the interview data includes: determining a relative interview ability level of a to-be-evaluated interviewer in a particular interviewer group based on degrees of interview result differences of different interviewers with respect to an identical candidate reflected by the interview data.

Further, the foregoing method can also have the following characteristics: the interview result differences of different interviewers include: differences of interview results assigned by different interviewers to an identical candidate in identical stages of different applications of the identical candidate, and/or differences of interview results assigned by different interviewers to an identical candidate in different stages of an identical application of the identical candidate.

Further, the foregoing method can also have the following characteristics: the step of determining a relative interview ability level of a to-be-evaluated interviewer in a particular interviewer group based on degrees of interview result differences of different interviewers with respect to an identical candidate reflected by the interview data includes:

calculating an evaluation score of each interview according to a set evaluation score model by using the interview data, the evaluation score model being based on the degrees of the interview result differences of the different interviewers with respect to the identical candidate;

calculating a single-interview evaluation score mean of each interviewer respectively, and recording the mean as a first mean;

calculating a ranking score of each interviewer according to the first mean based on a set ranking score model; and ranking the interviewers according to a descending order of the ranking scores, a position of the to-be-evaluated interviewer in the ranking being the relative interview ability level of the to-be-evaluated interviewer in the interviewer group.

Further, the foregoing method can also have the following characteristics: the step of calculating a ranking score of each interviewer according to the first mean based on a set ranking score model includes:
making the ranking scores of the interviewers equal to the respective first means corresponding to the interviewers.

Further, the foregoing method can also have the following characteristics: the step of calculating a ranking score of each interviewer according to the first mean based on a set ranking score model includes:

calculating a single-interview evaluation score mean of all interviewers involved in the interview data, and recording the mean as a second mean; and
obtaining the ranking score of each interviewer according to a weight of the first mean and a weight of the second mean.

Further, the foregoing method can also have the following characteristics: the step of obtaining the ranking score of each interviewer according to a weight of the first mean and a weight of the second mean includes:
setting the weight of the first mean to be positively correlated to v/(v+m) and the weight of the second mean to be positively correlated to m/(v+m), wherein v is a total number of interviews of a corresponding single interviewer involved in the interview data, and m is a preset number-of-interviews threshold.

The data processing method in the embodiment of the present invention can automatically use massive historical interview data to evaluate interview abilities of interviewers. On one hand, the workload of manual evaluation on the interviewers is reduced, thus achieving high efficiency and reducing the interviewer team management cost of an enterprise. On the other hand, the evaluation on the interview abilities of the interviewers is more objective and accurate, helping the enterprise to choose excellent interviewers, thus improving the interview performance of the enterprise.

In order to achieve the foregoing objective, the present invention further proposes a data processing apparatus, including:

an acquisition module configured to acquire interview data about candidates in a set historical period, the interview data being divided into separate interview rounds, and interview data of each round including a candidate, an interviewer, and an interview result; and
an evaluation module configured to evaluate interviewers based on interview result differences of different interviewers reflected by the interview data.

Further, the foregoing apparatus can also have the following characteristics: the evaluation module includes:
a determining module configured to determine a relative interview ability level of a to-be-evaluated interviewer in a particular interviewer group based on degrees of interview result differences of different interviewers with respect to an identical candidate reflected by the interview data.

Further, the foregoing apparatus can also have the following characteristics: the interview result differences of different interviewers include: differences of interview results assigned by different interviewers to an identical candidate in identical stages of different applications of the identical candidate, and/or differences of interview results assigned by different interviewers to an identical candidate in different stages of an identical application of the identical candidate.

Further, the foregoing apparatus can also have the following characteristics: the determining module includes:

an evaluation score calculation module configured to calculate an evaluation score of each interview according to a set evaluation score model by using the interview data, the evaluation score model being based on the degrees of the interview result differences of the different interviewers with respect to the identical candidate;
a first calculation module configured to calculate a single-interview evaluation score mean of each interviewer respectively, and record the mean as a first mean;
a ranking score module configured to calculate a ranking score of each interviewer according to the first mean calculated by the first calculation module based on a set ranking score model; and
a ranking module configured to rank the interviewers according to a descending order of the ranking scores calculated by the ranking score module, a position of the to-be-evaluated interviewer in the ranking being the relative interview ability level of the to-be-evaluated interviewer in the interviewer group.

Further, the foregoing apparatus can also have the following characteristics: the ranking score module includes:
a first processing unit configured to make the ranking scores of the interviewers equal to the respective first means corresponding to the interviewers.

Further, the foregoing apparatus can also have the following characteristics: the ranking score module includes:

a second calculation unit configured to calculate a single-interview evaluation score mean of all interviewers involved in the interview data, and record the mean as a second mean; and

a second processing unit configured to obtain the ranking score of each interviewer according to a weight of the first mean calculated by the first calculation module and a weight of the second mean calculated by the second calculation unit.

Further, the foregoing apparatus can also have the following characteristics: the second processing unit includes: a setting subunit configured to set the weight of the first mean to be positively correlated to $v/(v+m)$ and the weight of the second mean to be positively correlated to $m/(v+m)$, wherein $v$ is a total number of interviews of a corresponding single interviewer involved in the interview data, and $m$ is a preset number-of-interviews threshold.

The data processing apparatus in the embodiment of the present invention can automatically use massive historical interview data to evaluate interview abilities of interviewers. On one hand, the workload of manual evaluation on the interviewers is reduced, thus achieving high efficiency and reducing the interviewer team management cost of an enterprise. On the other hand, the evaluation on the interview abilities of the interviewers is more objective and accurate, helping the enterprise to choose excellent interviewers, thus improving the interview effect of the enterprise.

**Brief Description of the Drawings**

FIG. 1 is a flowchart of a data processing method according to Embodiment 1 of the present invention;
FIG. 2 is a schematic diagram of association of interview data of a candidate; and
FIG. 3 is a structural block diagram of a data processing apparatus according to Embodiment 2 of the present invention.

**Detailed Description**

The principle and features of the present invention are described in the following with reference to the accompanying drawings. Embodiments listed are merely used for illustrating the present invention and are not intended to limit the scope of the present invention. All embodiments obtained by those of ordinary skill in the art according to the spirit of the present invention without creative efforts belong to the protection scope of the present invention.

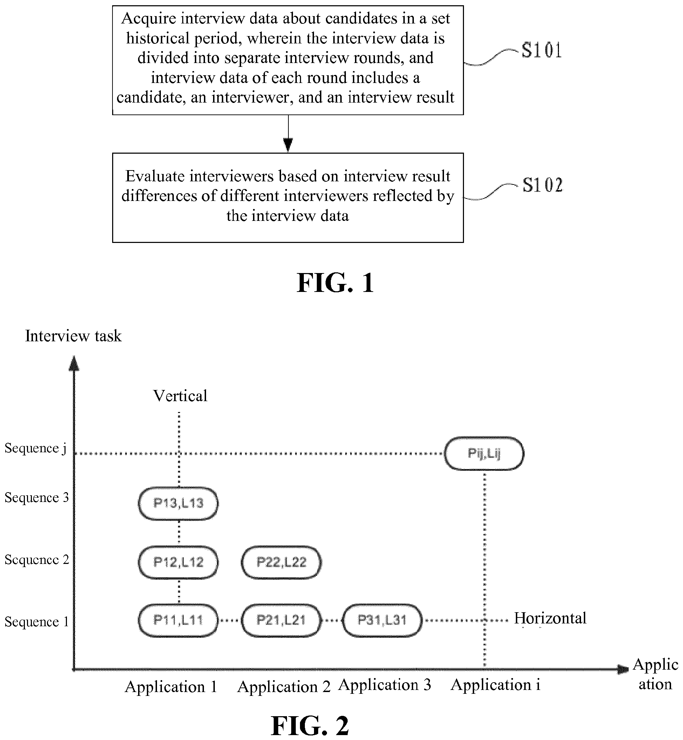

FIG. 1 is a flowchart of a data processing method according to Embodiment 1 of the present invention. As shown in FIG. 1, the data processing method in this embodiment can include the following steps:

Step S101. Interview data about candidates in a set historical period is acquired, the interview data being divided into separate interview rounds, and interview data of each round including a candidate, an interviewer, and an interview result.

The acquired interview data here is interview data in a past period of time, for example, interview data in the past one or two years, or interview data in the past several months.

The interview result can include whether a candidate passes an interview, a rating assigned by an interviewer to the candidate, and so on. In a specific application, passing an interview can be marked as 1 and failing an interview can be marked as 0. The rating assigned by the interviewer to the candidate can be a set integer range, for example, an integer from 1 to 5, an integer from 1 to 10, and so on.

Step S102. Interviewers are evaluated based on interview result differences of different interviewers reflected by the interview data.

In the embodiment of the present invention, step S102 can include: determining a relative interview ability level of a to-be-evaluated interviewer in a particular interviewer group based on degrees of interview result differences of different interviewers with respect to an identical candidate reflected by the interview data.

In this text, the identical candidate can include one candidate or can include multiple candidates. Interview results of the interviewers with respect to indirectly identical candidates can also be used for evaluation.

The particular interviewer group generally can be all interviewers in a company. The interviewer group in step S102 can be construed as all interviewers involved in the interview data in step S101.

The degrees of interview result differences represent how much the interview results assigned by different interviewers to an identical candidate differ from each other. For example, one candidate applies for 5 positions of a company, there is only one interviewer in an interview for each position, and there is only one round of interview for each position. It is assumed that among the interviews for the 5 positions, there is only one interviewer (assumed to be interviewer A) gives an interview result of failing the interview, and the other 4 interviewers all give an interview result of passing the interview. In this case, the interview result of the interviewer A differs by a great degree from the interview results of other interviewers with respect to the identical candidate. If 3 interviewers (including interviewer A) give an interview result of failing to pass the interview while the other 2 interviewers give an interview result of passing the interview, the interview result of the interviewer A differs by a small degree from the interview results of other interviewers with respect to the identical candidate.

The degrees of interview result differences are generated based on massive interview data in step S101, rather than being determined only according to interview results of one interview or a few interviews. In other words, the degrees of interview result differences are a conclusion made based on a large number of interview results of numerous interviews, rather than data based on one or a few interviews.

The interview result differences of different interviewers can include differences of interview results assigned by different interviewers to an identical candidate in identical stages of different applications of the identical candidate. The interview result differences of different interviewers can also include differences of interview results assigned by different interviewers to an identical candidate in different stages of an identical application of the identical candidate. The embodiment of the present invention can include the two situations at the same time or can include either of the two situations.

In the embodiment of the present invention, the step of determining a relative interview ability level of a to-be-evaluated interviewer in a particular interviewer group based on degrees of interview result differences of different interviewers with respect to an identical candidate reflected by the interview data can include the following step a to step d: Step a. An evaluation score of each interview is calculated according to a set evaluation score model by using the interview data, the evaluation score model being based on the degrees of the interview result differences of the different interviewers with respect to the identical candidate.

This step is actually a process of scoring each interview. Each interview is scored based on the same standard (which refers to the same evaluation score model here), and then numerous such scoring results are processed subsequently.

Step b. A single-interview evaluation score mean of each interviewer is calculated respectively, and is recorded as a first mean.

It is assumed that a total number of interviews of an interviewer is M, and a sum of evaluation scores obtained by the interviewer in the M interviews is N. In this case, the first mean of the interviewer is equal to N/M, wherein the symbol "/" represents a division operation.

An evaluation score of an interviewer in one interview is fortuitous. However, a mean of evaluation scores in many interviews can relatively authentically reflect an evaluation score level of the interviewer in a single interview.

Step c. A ranking score of each interviewer is calculated according to the first mean based on a set ranking score model.

The ranking score is used for evaluating an interview ability of an interviewer. The higher the ranking score is, the stronger the interview ability of the interviewer is. On the contrary, the lower the ranking score is, the poorer the interview ability of the interviewer is.

Step d. The interviewers are ranked according to a descending order of the ranking scores, a position of the to-be-evaluated interviewer in the ranking being the relative interview ability level of the to-be-evaluated interviewer in the interviewer group.

In the embodiment of the present invention, step c above can include: making the ranking scores of the interviewers equal to the respective first means corresponding to the interviewers.

In the embodiment of the present invention, step c above can include: calculating a single-interview evaluation score mean of all interviewers involved in the interview data, and recording the mean as a second mean; and obtaining the ranking score of each interviewer according to a weight of the first mean and a weight of the second mean. For example, weighted addition can be performed on the first mean and the second mean, and the result of the weighted addition is used as the ranking score of the interviewer. It is assumed that the total number of interviews of all the interviewers involved in the interview data is T, and a total of evaluation scores of the T interviews is Q. In this case, the second mean is equal to Q/T, wherein the symbol "/" represents a division operation. The ranking score obtained by weighted addition of the first mean and the second mean is more objective and pertinent.

In the embodiment of the present invention, the step of obtaining the ranking score of each interviewer according to a weight of the first mean and a weight of the second mean can include: setting the weight of the first mean to be positively correlated to $v/(v+m)$ and the weight of the second mean to be positively correlated to $m/(v+m)$, wherein v is a total number of interviews of a corresponding single interviewer involved in the interview data, and m is a preset number-of-interviews threshold. m can be set according to the minimum number of interviews of a set number of the first interviewers with the highest single-interview evaluation scores. In other words, the minimum number of interviews of the set number of the first interviewers with the highest single-interview evaluation scores can be set as the number-of-interviews threshold.

The data processing method is described in further detail below through specific application examples.

Example 1

In this example, it is assumed that an interview result includes contents of two aspects: one is whether a candidate passes the interview, wherein passing the interview is marked as 1 and failing the interview is marked as 0;

the other is a rating assigned by an interviewer to the candidate. Interview data of a candidate can be expressed by using the interview data association diagram shown in FIG. 2.

In FIG. 2, the abscissa Application represents each application, and the ordinate Task represents each round of interview task. In FIG. 2, Pij represents whether the candidate passes the jth round of interview task of the ith application (the value of Pij is 0 or 1), and Lij represents a rating given by an interviewer in the jth round of interview task of the ith application.

It is set in this example that the highest evaluation score in a single interview is 5.

(11) An evaluation score of each interview is calculated according to a set evaluation score model by using the interview data. The evaluation score model in this example is as follows:

$$S = Max\{W_{Horizontal} * S_{Horizontal} + W_{Vertical} * S_{Vertical}, 5\} \quad \text{Formula (1)}$$

wherein $W_{Horizontal}$ and $W_{Vertical}$ are weights set in advance according to empirical values, $S_{Horizontal}$ is a horizontal weight calculated according to the following formula (2), and $S_{Vertical}$ is a vertical weight calculated according to the following formula (3).

A sum of $W_{Horizontal}$ and $W_{Vertical}$ is a fixed value. When the horizontal weight $S_{Horizontal}$ is more emphasized, $W_{Horizontal}$ can be set to be greater than $W_{Vertical}$. When the vertical weight $S_{Vertical}$ more emphasized, $W_{Horizontal}$ can be set to be less than $W_{Vertical}$.

A formula for calculating the horizontal weight $S_{Horizontal}$ is as follows:

$$S_{Horizontal} = Max\{S_{P1} + S_{L1}, 5\} \quad \text{Formula (2)}$$

During calculation of the horizontal weight $S_{Horizontal}$, j is fixed, wherein

when $P_i$=1 and Pi+i=0, $S_{P1}$=2;
when $P_i$=1 and $P_{i+1}$=1, $S_{P1}$=4;
when $P_i$=0, $S_{P1}$=0;
when Li=Li+i, $S_{L1} = _{\alpha 1} * (L_i + \beta_1)$;
when $|L_i - L_i + 1| = 1$, $S_{L1}$=0, $|L_i - L_i + 1|$ representing an absolute value of a difference between Li and $L_{i+1}$; and
when $|L_i - L_{i+1}| > 1$, $S_{L1} = -\alpha_2 * (|L_i - L_{i+1}| + \beta_2)$,
wherein $\alpha_1, \beta_1, \alpha_2$ and $\beta_2$ are preset weighting factors, and $\alpha_1, \beta_1, \alpha_2$ and $\beta_2$ are positive integers.

A formula for calculating the vertical weight $S_{Vertical}$ is as follows:

$$S_{Vertical} = Max\{S_{P2} + S_{L2}, 5\} \quad \text{Formula (3)}$$

During calculation of the vertical weight $S_{Vertical}$, i is fixed, wherein

when $P_j$=1 and $P_{j+1}$=0, $S_{P2}$=2;
when $P_j$=1 and $P_{j+1}$=1, $S_{P2}$=4;
when $P_j$=0, $S_{P2}$=0;
when $L_j = L_{j+1}$, $S_{L2} = \alpha_1 * (L_i + \beta_1)$;
when $|L_j - L_{j+1}| = 1$, $S_{L2}$=0, $|L_j - L_{j+1}|$ representing an absolute value of a difference between $L_j$ and $L_{j+1}$; and
when $|L_j - L_{j+1}| > 1$, $S_{L2} = \alpha_2 * (|L_j - L_{j+1}| + \beta_2)$,
wherein $\alpha_1, \beta_1, \alpha_2$ and $\beta_2$ are preset weighting factors, and $\alpha_1, \beta_1, \alpha_2$ and $\beta_2$ are positive integers.

According to the evaluation score model in this example, if two evaluations are different, the larger the difference between the two evaluations is, the lower the evaluation score will be.

(12) A single-interview evaluation score mean of each interviewer is calculated respectively and recorded as a first mean. It is assumed that the first mean of a to-be-evaluated interviewer is R.

It is assumed that a total number of interviews of an interviewer is M, and a sum of evaluation scores obtained by the interviewer in the M interviews is N. In this case, the first mean of the interviewer is equal to N/M, wherein the symbol "/" represents a division operation.

(13) A single-interview evaluation score mean of all interviewers involved in the interview data is calculated and recorded as a second mean. It is assumed that the second mean is C.

It is assumed that the total number of interviews of all the interviewers involved in the interview data is T, and a total of evaluation scores of the T interviews is Q. In this case, the second mean is equal to Q/T, wherein the symbol "/" represents a division operation.

(14) Weighted addition is performed on the first mean and the second mean to obtain a ranking score of each interviewer.

A weight of the first mean is set to v/(v+m) and a weight of the second mean is set to m/(v+m), wherein v is a total number of interviews of a corresponding single interviewer involved in the interview data, and m is the minimum number of interviews of a specified number of the first interviewers with the highest single-interview evaluation scores (this ranking is arranged based on S values in a single interview as calculated in (11)).
A method for calculating the ranking score WR of the to-be-evaluated interviewer is as shown in the following formula (4):

$$WR = \frac{v}{v+m} * R + \frac{m}{v+m} * C \text{ Formula (4)}$$

The ranking score of each interviewer can be calculated according to formula (1) to formula (4).

(15) The interviewers are ranked according to a descending order of the ranking scores, a position of the to-be-evaluated interviewer in the ranking being a relative interview ability level of the to-be-evaluated interviewer in the interviewer group.

Example 2

In this example, it is assumed that the interview result only includes a content of one aspect, i.e., whether a candidate passes the interview. It is assumed that each candidate applies for several positions, there is only one round of interview for each position, and each interview has only one interviewer.

(21) An evaluation score of each interview is calculated according to a set evaluation score model by using the interview data. The evaluation score model in this example is as follows:

The evaluation score is equal to a proportion of the interview result in all interview results with respect to the identical candidate. For example, one candidate applies for 10 positions, wherein 4 interview results indicate that the candidate fails the interview and 6 interview results indicate that the candidate passes the interview. In this case, an evaluation score of an interviewer giving the interview result of failing the interview is 4/(4+6)=0.4, and an evaluation score of an interviewer giving the interview result of passing the interview is 6/(4+6)=0.6.

(22) A single-interview evaluation score mean of each interviewer is calculated respectively and recorded as a first mean.
(23) The first mean of the interviewer is used as a ranking score of the interviewer.
(24) The interviewers are ranked according to a descending order of the ranking scores, a position of the to-be-evaluated interviewer in the ranking being a relative interview ability level of the to-be-evaluated interviewer in the interviewer group.

The data processing method in the embodiment of the present invention can automatically use massive historical interview data to evaluate interview abilities of interviewers. On one hand, the workload of manual evaluation on the interviewers is reduced, thus achieving high efficiency and reducing the interviewer team management cost of an enterprise. On the other hand, the evaluation on the interview abilities of the interviewers is more objective and accurate, helping the enterprise to choose excellent interviewers, thus improving the interview performance of the enterprise.

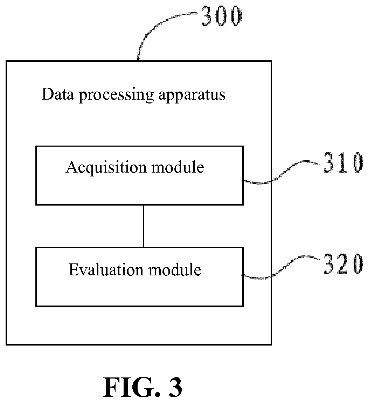

FIG. 3 is a structural block diagram of a data processing apparatus according to Embodiment 2 of the present invention. The data processing apparatus in FIG. 3 can be used for implementing the data processing method in the foregoing embodiment of the present invention. The principle in the foregoing embodiment of the data processing method of the present invention is also applicable to the following data processing apparatus.

As shown in FIG. 3, in this embodiment, the data processing apparatus 300 can include an acquisition module 310 and an evaluation module 320. The acquisition module 310 is configured to acquire interview data about candidates in a set historical period, wherein the interview data is divided into separate interview rounds, and interview data of each round includes a candidate, an interviewer, and an interview result. The evaluation module 320 is configured to evaluate interviewers based on interview result differences of different interviewers reflected by the interview data.

In the embodiment of the present invention, the evaluation module 320 can include a determining module. The determining module is configured to determine a relative interview ability level of a to-be-evaluated interviewer in a particular interviewer group based on degrees of interview result differences of different interviewers with respect to an identical candidate reflected by the interview data.

The interview result differences of different interviewers can include differences of interview results assigned by different interviewers to an identical candidate in identical stages of different applications of the identical candidate. The interview result differences of different interviewers can also include differences of interview results assigned by different interviewers to an identical candidate in different stages of an identical application of the identical candidate. The embodiment of the present invention can include the two situations at the same time or can include either of the two situations.

In the embodiment of the present invention, the determining module can further include an evaluation score calculation module, a first calculation module, a ranking score module, and a ranking module. The evaluation score calculation module is configured to calculate an evaluation score of each interview according to a set evaluation score model by using the interview data, wherein the evaluation score model is based on the degrees of the interview result differences of the different interviewers with respect to the identical candidate. The first calculation module is configured to calculate a single-interview evaluation score mean of each interviewer respectively, and record the mean as a first mean. The ranking score module is configured to calculate a ranking score of each interviewer according to the first mean based on a set ranking score model. The ranking module is configured to rank the interviewers according to a descending order of the ranking scores calculated by the ranking score module, a position of the to-be-evaluated interviewer in the ranking being the relative interview ability level of the to-be-evaluated interviewer in the interviewer group.

In the embodiment of the present invention, the ranking score module can include a first processing unit. The first processing unit is configured to make the ranking scores of the interviewers equal to the respective first means corresponding to the interviewers.

In the embodiment of the present invention, the ranking score module can include a second calculation unit and a second processing unit. The second calculation unit is configured to calculate a single-interview evaluation score mean of all interviewers involved in the interview data, and record the mean as a second mean. The second processing unit is configured to obtain the ranking score of each interviewer according to a weight of the first mean calculated by the first calculation module and a weight of the second mean calculated by the second calculation unit. For example, weighted addition can be performed on the first mean and the second mean, and the result of the weighted addition is used as the ranking score of the interviewer.

In the embodiment of the present invention, the second processing unit can include a setting subunit. The setting subunit is configured to set the weight of the first mean to be positively correlated to $v/(v+m)$ and the weight of the second mean to be positively correlated to $m/(v+m)$, wherein $v$ is a total number of interviews of a corresponding single interviewer involved in the interview data, and $m$ is a preset number-of-interviews threshold.

The data processing apparatus in the embodiment of the present invention can automatically use massive historical interview data to evaluate interview abilities of interviewers. On one hand, the workload of manual evaluation on the interviewers is reduced, thus achieving high efficiency and reducing the interviewer team management cost of an enterprise. On the other hand, the evaluation on the interview abilities of the interviewers is more objective and accurate, helping the enterprise to choose excellent interviewers, thus improving the interview performance of the enterprise.

Described above are merely preferred embodiments of the present invention, which are not intended to limit the present invention. Any modification, equivalent replacement, improvement and the like made within the spirit and principle of the present invention shall be included in the protection scope of the present invention.

## Claims

1. A data processing method, comprising:

acquiring interview data about candidates in a set historical period, the interview data being divided into separate interview rounds, and interview data of each round comprising a candidate, an interviewer, and an interview result; and

evaluating interviewers based on interview result differences of different interviewers reflected by the interview data.

2. The data processing method according to claim 1, wherein the step of evaluating interviewers based on interview result differences of different interviewers reflected by the interview data comprises:

determining a relative interview ability level of a to-be-evaluated interviewer in a particular interviewer group based on degrees of interview result differences of different interviewers with respect to an identical candidate reflected by the interview data.

3. The data processing method according to claim 1, wherein the interview result differences of different interviewers comprise: differences of interview results assigned by different interviewers to an identical candidate in identical stages of different applications of the identical candidate, and/or differences of interview results assigned by different interviewers to the identical candidate in different stages of an identical application of the identical candidate.

4. The data processing method according to claim 2, wherein the step of determining a relative interview ability level of a to-be-evaluated interviewer in a particular interviewer group based on degrees of interview result differences of different interviewers with respect to an identical candidate reflected by the interview data comprises:

calculating an evaluation score of each interview according to a set evaluation score model by using the interview data, the evaluation score model being based on the degrees of the interview result differences of the different interviewers with respect to the identical candidate;

calculating a single-interview evaluation score mean of each interviewer respectively, and recording the mean as a first mean;

calculating a ranking score of each interviewer according to the first mean based on a set ranking score model; and

ranking the interviewers according to a descending order of the ranking scores, a position of the to-be-evaluated interviewer in the ranking being the relative interview ability level of the to-be-evaluated interviewer in the interviewer group.

5. The data processing method according to claim 4, wherein the step of calculating a ranking score of each interviewer according to the first mean based on a set ranking score model comprises:

making the ranking scores of the interviewers equal to the respective first means corresponding to the interviewers.

6. The data processing method according to claim 4, wherein the step of calculating a ranking score of each interviewer according to the first mean based on a set ranking score model comprises:

calculating a single-interview evaluation score mean of all interviewers involved in the interview data, and recording the mean as a second mean; and

obtaining the ranking score of each interviewer according to a weight of the first mean and a weight of the second mean.

7. The data processing method according to claim 6, wherein the step of obtaining the ranking score of each interviewer according to a weight of the first mean and a weight of the second mean comprises:

setting the weight of the first mean to be positively correlated to $v/(v+m)$ and the weight of the second mean to be positively correlated to $m/(v+m)$, wherein v is a total number of interviews of a corresponding single interviewer involved in the interview data, and m is a preset number-of-interviews threshold.

8. A data processing apparatus, comprising:

an acquisition module configured to acquire interview data about candidates in a set historical period, the interview data being divided into separate interview rounds, and interview data of each round comprising a candidate, an interviewer, and an interview result; and

an evaluation module configured to evaluate interviewers based on interview result differences of different interviewers reflected by the interview data.

**9.** The data processing apparatus according to claim 8, wherein the evaluation module comprises:
a determining module configured to determine a relative interview ability level of a to-be-evaluated interviewer in a particular interviewer group based on degrees of interview result differences of different interviewers with respect to an identical candidate reflected by the interview data acquired by the acquisition module.

**10.** The data processing apparatus according to claim 8, wherein the interview result differences of different interviewers comprise: differences of interview results assigned by different interviewers to an identical candidate in identical stages of different applications of the identical candidate, and/or differences of interview results assigned by different interviewers to an identical candidate in different stages of an identical application of the identical candidate.

**11.** The data processing apparatus according to claim 9, wherein the determining module comprises:

an evaluation score calculation module configured to calculate an evaluation score of each interview according to a set evaluation score model by using the interview data, the evaluation score model being based on the degrees of the interview result differences of the different interviewers with respect to the identical candidate;
a first calculation module configured to calculate a single-interview evaluation score mean of each interviewer respectively, and record the mean as a first mean;
a ranking score module configured to calculate a ranking score of each interviewer according to the first mean calculated by the first calculation module based on a set ranking score model; and
a ranking module configured to rank the interviewers according to a descending order of the ranking scores calculated by the ranking score module, a position of the to-be-evaluated interviewer in the ranking being the relative interview ability level of the to-be-evaluated interviewer in the interviewer group.

**12.** The data processing apparatus according to claim 11, wherein the ranking score module comprises:
a first processing unit configured to make the ranking scores of the interviewers equal to the respective first means corresponding to the interviewers.

**13.** The data processing apparatus according to claim 11, wherein the ranking score module comprises:

a second calculation unit configured to calculate a single-interview evaluation score mean of all interviewers involved in the interview data, and record the mean as a second mean; and
a second processing unit configured to obtain the ranking score of each interviewer according to a weight of the first mean calculated by the first calculation module and a weight of the second mean calculated by the second calculation unit.

**14.** The data processing apparatus according to claim 13, wherein the second processing unit comprises:
a setting subunit configured to set the weight of the first mean to be positively correlated to $v/(v+m)$ and the weight of the second mean to be positively correlated to $m/(v+m)$, wherein v is a total number of interviews of a corresponding single interviewer involved in the interview data, and m is a preset number-of-interviews threshold.

Acquire interview data about candidates in a set historical period, wherein the interview data is divided into separate interview rounds, and interview data of each round includes a candidate, an interviewer, and an interview result

S101

Evaluate interviewers based on interview result differences of different interviewers reflected by the interview data

S102

## FIG. 1

Interview task

Vertical

Sequence j ............................................................. $P_{ij},L_{ij}$

Sequence 3 $P13,L13$

Sequence 2 $P12,L12$ $P22,L22$

Sequence 1 $P11,L11$ .... $P21,L21$ .... $P31,L31$ ............. Horizontal

Application 1    Application 2    Application 3    Application i    Application

## FIG. 2

FIG. 3

# INTERNATIONAL SEARCH REPORT

| International application No. |
| --- |
| PCT/CN2017/077905 |

## A. CLASSIFICATION OF SUBJECT MATTER

G06Q 10/10 (2012.01) i

According to International Patent Classification (IPC) or to both national classification and IPC

## B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: interviewer, judge, evaluate, estimate, different, grade

## C. DOCUMENTS CONSIDERED TO BE RELEVANT

| Category* | Citation of document, with indication, where appropriate, of the relevant passages | Relevant to claim No. |
| --- | --- | --- |
| X | CN 101847223 A (104 MANAGEMENT CONSULTING CO., LTD.) 29 September 2010 (29.09.2010) description, paragraphs [0020] and [0021] | 1-14 |
| X | CN 102609771 A (MA, Jun) 25 July 2012 (25.07.2012) description, paragraphs [0020] and [0021] | 1-14 |
| A | US 2009228323 A1 (HIAIM, INC.) 10 September 2009 (10.09.2009) the whole document | 1-14 |
| A | US 2014156356 A1 (OLIVIER, MICHAEL et al.) 05 June 2014 (05.06.2014) the whole document | 1-14 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 May 2017 | 29 June 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer KONG, Xin Telephone No. (86-10) 62413668 |
| --- | --- |

Form PCT/ISA/210 (second sheet) (July 2009)

## INTERNATIONAL SEARCH REPORT
### Information on patent family members

International application No.

PCT/CN2017/077905

| Patent Documents referred in the Report | Publication Date | Patent Family | Publication Date |
|---|---|---|---|
| CN 101847223 A | 29 September 2010 | None | |
| CN 102609771 A | 25 July 2012 | None | |
| US 2009228323 A1 | 10 September 2009 | WO 2009114129 A1 | 17 September 2009 |
| US 2014156356 A1 | 05 June 2014 | None | |

Form PCT/ISA /210 (patent family annex) (July 2009)